(19) **Europäisches Patentamt**
**European Patent Office**
**Office européen des brevets**

(11) **EP 1 880 259 B1**

(12) **FASCICULE DE BREVET EUROPEEN**

(45) Date de publication et mention
de la délivrance du brevet:
**27.08.2008 Bulletin 2008/35**

(21) Numéro de dépôt: **06743759.0**

(22) Date de dépôt: **04.05.2006**

(51) Int Cl.:
***G05D 1/06*** *(2006.01)*

(86) Numéro de dépôt international:
**PCT/FR2006/001000**

(87) Numéro de publication internationale:
**WO 2006/120321 (16.11.2006 Gazette 2006/46)**

(54) **PROCEDE D'AIDE AU DECOLLAGE D'UN AERONEF**

VERFAHREN ZUM UNTERSTÜTZTEN ABHEBEN FÜR FLUGZEUGE

ASSISTED TAKE-OFF METHOD FOR AIRCRAFT

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **10.05.2005 FR 0504662**

(43) Date de publication de la demande:
**23.01.2008 Bulletin 2008/04**

(73) Titulaire: **AIRBUS France
31060 Toulouse Cedex (FR)**

(72) Inventeurs:
• **MATHIEU, Gérard
F-31820 Pibrac (FR)**

• **DELAPLACE, Franck
F-31300 Toulouse (FR)**
• **LE TRON, Xavier
F-31700 Blagnac (FR)**

(74) Mandataire: **Hauer, Bernard
Cabinet Bonnétat
29, Rue de Saint-Pétersbourg
75008 Paris (FR)**

(56) Documents cités:
**FR-A- 2 817 535          FR-A- 2 826 469
US-A- 4 825 375          US-B1- 6 325 333**

Printed by Jouve, 75001 PARIS (FR)

**Description**

La présente invention concerne un procédé d'aide au décollage d'un aéronef permettant d'uniformiser le comportement dudit aéronef lors des rotations de décollage et d'éliminer, ou à tout le moins de réduire, l'influence de variations de certains paramètres de l'aéronef, tels que masse, configuration des becs de bord d'attaque et des volets de bord de fuite, poussée, vitesse au moment de la rotation, etc ...

On sait que, préalablement à un décollage d'aéronef, le pilote détermine une valeur VR de la vitesse de l'aéronef, dite vitesse de rotation, à laquelle doit commencer la rotation de décollage, à la fin de la phase d'accélération pendant laquelle ledit aéronef roule sur la piste de décollage en accélérant. Cette vitesse de rotation VR résulte d'un calcul d'optimisation du décollage de l'aéronef prenant en compte aussi bien les caractéristiques dudit aéronef (masse, poussée, configuration des becs et des volets,...) que les caractéristiques de la piste de décollage (longueur, altitude, état, température,...). De plus, elle doit se trouver dans une plage de valeurs de vitesse imposée par des dispositions réglementaires.

De plus, on sait que certains aéronefs comportent un empennage horizontal stabilisateur, réglable en inclinaison. Un tel empennage horizontal réglable est, dans la technique, désigné par l'une ou l'autre des abréviations PHR (pour Plan Horizontal Réglable) ou THS (pour Trimmable Horizontal Stabiliser). Tout comme un empennage horizontal fixe, un empennage horizontal réglable est pourvu de gouvernes de profondeur formant le bord de fuite dudit empennage horizontal réglable.

Un empennage horizontal réglable peut être braqué dans le sens à cabrer ou à piquer et il est utilisé dans certaines phases de vol. Par exemple, lors du décollage de l'aéronef et préalablement à la rotation, il est usuel de braquer ledit empennage horizontal réglable, par action du pilote ou d'un système automatique, d'un angle de braquage de valeur prédéterminée. La valeur théorique optimale de l'angle de braquage de l'empennage horizontal réglable dépend de plusieurs paramètres de l'aéronef, tels que la position longitudinale du centre de gravité, la masse totale au décollage, la configuration des becs de bord d'attaque et des volets de bord de fuite, la poussée, la vitesse à laquelle se fait la rotation, etc ...

La valeur réelle de l'angle de braquage est importante car elle conditionne le comportement de l'avion pendant la rotation. Si la valeur réelle de cet angle de braquage est trop à cabrer, il peut s'ensuivre un décollage spontané sans intervention du pilote avec un éventuel toucher de queue ou bien, au contraire, si elle est trop à piquer, un décollage laborieux pénalisant les performances de l'aéronef.

En règle générale, au décollage, la valeur de l'angle de braquage de l'empennage horizontal réglable correspond à un moment à cabrer, ce qui est notamment le cas lorsque le centre de gravité de l'aéronef occupe une position longitudinale avancée vers le nez de l'aéronef : en effet, dans ce cas, l'aéronef est difficile à faire tourner au moment de la rotation et l'empennage horizontal réglable doit créer un moment cabreur élevé. Cependant, lorsque le centre de gravité de l'aéronef est en position longitudinale arrière, l'aéronef a tendance à tourner très facilement et l'empennage horizontal réglable ne doit créer qu'un faible moment de tangage, qui peut être cabreur, voire même piqueur.

Comme il a été rappelé ci-dessus, la valeur théorique optimale de l'angle de braquage, au décollage, de l'empennage horizontal réglable dépend de nombreux paramètres. Aussi, pour un réglage précis de l'inclinaison dudit empennage horizontal réglable, est-il nécessaire de tenir compte de la totalité, ou à tout le moins d'un grand nombre, de ces paramètres, ce qui conduit à des réglages compliqués. La demande de brevet FR-2 826 469 donne un exemple de commande d'une surface aérodynamique de profondeur d'un avion lors d'un décollage.

La présente invention a pour objet de remédier à ces inconvénients.

A cette fin, selon l'invention, le procédé d'aide au décollage d'un aéronef comportant un empennage horizontal réglable auquel sont articulées des gouvernes de profondeur, procédé selon lequel :

- on prédétermine :

  ■ une valeur VR de la vitesse de l'aéronef, dite vitesse de rotation, à laquelle doit commencer la rotation de décollage à la fin de la phase d'accélération pendant laquelle ledit aéronef roule sur le sol en accélérant, et
  ■ la plage réglementaire des valeurs de vitesse à l'intérieur de laquelle doit se trouver ladite vitesse de rotation VR ; et

- on applique audit aéronef une commande en tangage d'aide au décollage braquant ledit empennage horizontal réglable d'un angle de valeur prédéterminée,

est remarquable en ce que :

- préalablement à ladite phase d'accélération, on choisit arbitrairement, dans ladite plage réglementaire de valeurs de vitesse, une vitesse de référence VRref, inférieure à ladite vitesse de rotation VR, et on détermine, pour cette vitesse de référence VRref, ladite valeur prédéterminée de l'angle de braquage dudit empennage horizontal réglable au moins en fonction de la position longitudinale du centre de gravité dudit aéronef au décollage ; et

- pendant ladite phase d'accélération :

■ on mesure la vitesse VC dudit aéronef ;
■ on détermine en continu l'écart variable existant entre ladite vitesse mesurée VC et ladite vitesse de référence VRref ; et
■ on effectue une correction variable de ladite commande en tangage d'aide au décollage en fonction dudit écart de vitesse.

A la rotation, on peut soit laisser se prolonger la correction quelque temps pendant l'envol de l'aéronef, soit la figer à la valeur qu'elle atteint au moment de la rotation pour une valeur de la vitesse VC au moins approximativement égale à la vitesse de rotation VR.

Ainsi, selon la présente invention, antérieurement à la rotation, l'angle de braquage de l'empennage horizontal réglable peut n'être rendu dépendant que d'un nombre limité de paramètres parmi ceux cités ci-dessus, comportant au moins la position longitudinale du centre de gravité de l'aéronef, encore appelée "centrage", qui se trouve être important et connu avec précision. On obtient ainsi une grande simplification du réglage du braquage dudit empennage horizontal réglable.

Bien entendu, la valeur dudit angle de braquage ainsi obtenue n'est qu'une valeur simplifiée de compromis qui pourrait avoir pour conséquence que , d'un décollage à l'autre, le comportement de l'aéronef à la rotation serait différent, puisqu'un ou plusieurs des paramètres non pris en compte par cette valeur de compromis varie(nt), ce qui perturberait le pilote et pourrait conduite à un toucher du sol par la queue de l'aéronef.

Cependant, conformément à la présente invention, cet inconvénient est éliminé par la correction appliquée avant le début de la rotation et faisant intervenir l'écart entre VC et VRref, ce qui permet, de plus, d'uniformiser le comportement au décollage de l'aéronef en éliminant ou au moins en réduisant l'influence des variations des paramètres non pris en compte. On remarquera à ce propos que VRref est indépendante du pilote.

Ainsi, la présente invention permet de mettre en oeuvre une valeur simplifiée de compromis pour l'angle de braquage dudit empennage horizontal réglable, en évitant les complications entraînées par la prise en compte des nombreux paramètres intervenant dans la valeur théorique de cet angle de braquage et en permettant une uniformisation du comportement de l'aéronef lors de ses décollages successifs.

La correction de ladite commande en tangage d'aide au décollage peut être obtenue par l'action soit dudit empennage horizontal réglable, soit desdites gouvernes de profondeur, ou bien encore pour partie par action dudit empennage horizontal réglable et pour partie par action desdites gouvernes de profondeur.

Par ailleurs, ledit écart de vitesse existant entre lesdites valeurs VC et VRref peut être estimé soit par leur rapport, soit par leur différence.

Puisque, de façon générale, pour un effet égal, la commande en tangage d'un aéronef au décollage doit être d'autant plus à piquer que la vitesse de celui-ci est plus grande, il en résulte que, si la vitesse VC de l'aéronef est supérieure à la vitesse de référence VRref, la correction de ladite commande en tangage d'aide au décollage doit se traduire par une action à piquer et que, inversement, si la vitesse VC de l'aéronef est inférieure à ladite vitesse de référence VRref, la correction de ladite commande en tangage d'aide au décollage doit entraîner une augmentation de l'action à cabrer, ladite correction étant nulle lorsque la vitesse VC est égale à la vitesse de référence VRref.

Cependant, on comprendra aisément qu'il n'est pas pertinent de modifier l'action de l'empennage horizontal, lorsque la vitesse VC de l'aéronef est très inférieure à la vitesse de référence VRref. De plus, le plus souvent, il est inutile d'effectuer une telle modification tant que la vitesse VC est inférieure à VRref ou à une vitesse un peu inférieure (par exemple de 10 kts) à VRref.

Pour simplifier la mise en oeuvre de l'invention, on choisit, avantageusement, comme vitesse de référence VRref, la vitesse minimale de la plage de vitesses de rotation dans laquelle doit se trouver ladite vitesse de rotation réelle pour respecter les dispositions réglementaires.

Cette valeur minimale, et donc la vitesse de référence VRref, peuvent alors être égales au produit KxVS1g, dans lequel K est un coefficient supérieur à 1 fonction de la poussée et VS1g est la vitesse à laquelle ledit aéronef décroche lorsqu'il est en vol horizontal avec une configuration des becs de bord d'attaque et des volets de bord de fuite semblable à celle utilisée pour le décollage.

On notera que l'équation de sustentation à la vitesse de décrochage VS1 g s'écrit

$$Mxg = 0,5 \times \rho \times (VS1g)^2 \times Czmax \times S$$

expression dans laquelle M est la masse de l'aéronef, g l'accélération de la pesanteur, p la densité de l'air, Czmax le coefficient de portance maximal et S la surface de référence. Il résulte de cette équation que la vitesse de décrochage VS1g dépend de la masse de l'aéronef, de l'altitude (par le densité p), de la configuration des becs et des volets (par le coefficient Czmax) et de la position longitudinale du centre de gravité de l'aéronef (également par le coefficient Czmax).

Le coefficient K du produit KxVS1g dépend du rapport entre la poussée de l'aéronef au décollage et le poids dudit aéronef. Il dépend donc du niveau de poussée commandé au décollage et indirectement de l'altitude et de la température (par la poussée) et de la masse de l'aéronef. La valeur moyenne du coefficient K est de l'ordre de 1,06.

Bien que, comme cela a été mentionné ci-dessus, l'écart variable existant entre lesdites vitesses VC et VRref puisse être estimé par leur rapport, il est tout particulièrement avantageux qu'il soit estimé par leur différence, du type VC-VRref, c'est à dire VC-KxVS1g en tenant compte de la particularité ci-dessus.

En effet, la différence VC-KxVS1 g donne une indication sur la qualité de la rotation de l'aéronef -rapide ou laborieuse- (le moment cabreur engendré par l'empennage horizontal réglable et les gouvernes de profondeur dépend du carré de la vitesse au moment de la rotation) et permet donc d'agir en conséquence.

Dans le cas où l'on met en oeuvre l'empennage horizontal réglable, ladite valeur prédéterminée de l'angle de braquage de ce dernier est modifiée d'un angle de correction variable ΔiH, du type

$$\Delta iH = K1 \times (VC - K \times VS1g)$$

expression dans laquelle K1 est un coefficient dépendant de la vitesse de référence VRref, de la position longitudinale du centre de gravité et de la configuration des volets de bord de fuite et des becs de bord d'attaque, le coefficient K1 pouvant, par exemple, présenter une valeur moyenne de l'ordre de 0,16 degré d'angle par noeud de vitesse.

De même, si l'on met en oeuvre les gouvernes de profondeur, celles-ci sont braquées d'un angle supplémentaire de correction variable Δδq dont la valeur est du type

$$\Delta \delta q = K2 \times (VC - K \times VS1g)$$

expression dans laquelle K2 est un coefficient dépendant également de la vitesse de référence VRref, de la position longitudinale du centre de gravité, de la configuration des volets de bord de fuite et des becs de bord d'attaque et de la poussée au décollage.

Si, pour l'aéronef considéré, l'empennage horizontal réglable est n fois plus efficace, en ce qui concerne la commande en tangage, que lesdites gouvernes de profondeur, K2 est choisi n fois plus grand que K1.

La mise en oeuvre du procédé conforme à la présente invention est particulièrement aisée, notamment lorsqu'on utilise les gouvernes de profondeur. En effet, il suffit alors de modifier, pendant la phase de rotation, la caractéristique de l'aéronef donnant le braquage des gouvernes de profondeur en fonction de l'ordre de braquage commandé. Comme on le verra ci-après, de nombreuses modifications de cette caractéristique sont possibles pour mettre en oeuvre l'invention.

Les figures du dessin annexé feront bien comprendre comment l'invention peut être réalisée. Sur ces figures, des références identiques désignent des éléments semblables.

La figure 1 montre, en perspective schématique, un avion civil gros porteur pourvu d'un empennage horizontal réglable.

La figure 2 illustre, en trois phases successives usuelles, le décollage dudit avion.

Les figures 3A et 3B montrent un exemple de positionnement usuel de l'empennage horizontal réglable et des gouvernes de profondeur qui y sont attachées, respectivement avant et à partir de la rotation de décollage.

Les figures 4A à 4C, 5A à 5C, 6A à 6D et 7A à 7D illustrent respectivement des exemples de mise en oeuvre du procédé conforme à la présente invention.

La figure 8 montre un exemple de diagramme connu, usuel, illustrant la variation de l'angle de braquage des gouvernes de profondeur d'un avion en fonction de l'ordre de braquage commandé.

Les figures 9 et 10 montrent des variantes du diagramme de la figure 8 pour mettre en oeuvre les deux exemples du procédé de l'invention, illustrés respectivement par les figures 4A à 4C et 6A à 6D.

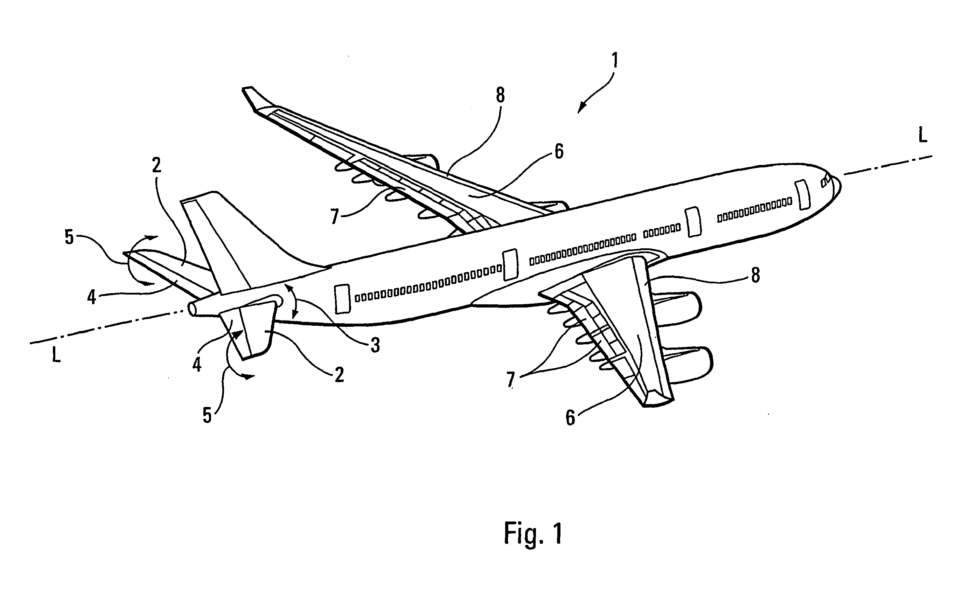

L'avion gros porteur 1, montré schématiquement par la figure 1, présente un axe longitudinal L-L et comporte un empennage horizontal 2 réglable en inclinaison, comme cela est illustré par la double flèche 3. Au bord arrière dudit empennage horizontal réglable 2, sont articulées des gouvernes de profondeur 4 pouvant tourner par rapport audit empennage 2, comme cela est illustré par les doubles flèches 5.

De plus, sur ses ailes 6, l'avion 1 comporte des volets de bord de fuite 7 et des becs de bord d'attaque 8.

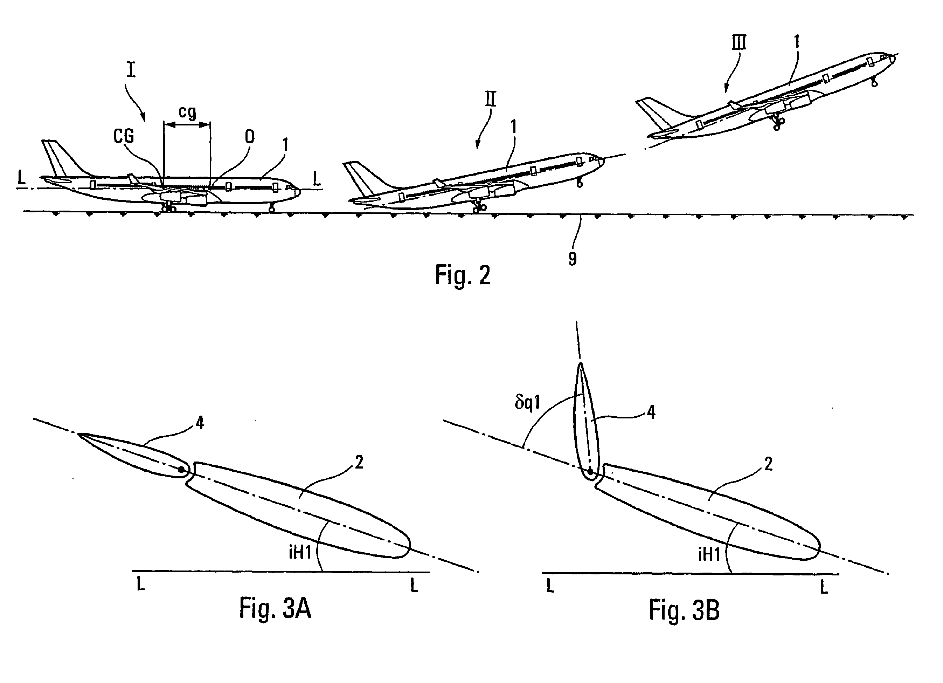

Dans la technique connue, lorsque l'avion 1, reposant sur la piste de décollage 9, se prépare au décollage, on détermine, en fonction d'au moins certains des paramètres mentionnés ci-dessus, d'une part, la vitesse VR à laquelle la rotation de décollage devra commencer et qui doit se trouver dans une plage de valeurs de vitesse imposée par des dispositions réglementaires et, d'autre part, une valeur iH1 de l'angle de braquage iH de l'empennage horizontal réglable 2 et on règle l'inclinaison de celui-ci à cette valeur iH1 (généralement à cabrer) par rapport audit axe longitudinal L-L (voir la figure 3A), de façon que ledit empennage horizontal réglable 2 soit apte, pendant le décollage, à exercer une action en tangage d'aide au décollage appropriée.

Sur la figure 2, on a illustré les trois phases usuelles I, II et III que connaît l'avion 1 lors de son envol.

Dans la phase I, l'avion 1 roule sur la piste de décollage 9 en accélérant pour atteindre la vitesse de rotation prédéterminée VR.

Pendant cette phase d'accélération I, les volets de bord de fuite 7 et les becs de bord d'attaque 8 sont déployés de façon usuelle (non représentée), l'empennage horizontal réglable 2 est incliné de l'angle iH1 et les gouvernes de profondeur 4 sont, par exemple, dans leur position prolongeant aérodynamiquement ledit empennage horizontal réglable 2. Dans cette configuration usuelle, illustrée par la figure 3A, l'ensemble dudit empennage horizontal réglable 2 et des gouvernes de profondeur 4 engendre une force aérodynamique à cabrer produisant un moment de tangage à cabrer pour l'avion 1.

Toujours de façon usuelle, lorsque la vitesse VC de l'avion 1 atteint la vitesse de rotation VR (phase II sur la figure 2), le pilote actionne les gouvernes de profondeur 4 pour leur faire prendre une position à cabrer, définie par une valeur δq1 de l'angle de braquage δq par rapport à l'empennage horizontal réglable 2 (voir la figure 3B). L'ensemble dudit empennage horizontal réglable 2 et des gouvernes 4 engendre alors une force aérodynamique à cabrer et un moment de tangage à cabrer, respectivement supérieurs à ceux engendrés dans la disposition de la figure 3A et aptes à provoquer l'envol de l'avion 1.

Pendant cet envol, l'empennage horizontal réglable 2 est maintenu dans sa position inclinée définie par l'angle iH1 avec les gouvernes 4 braquées à cabrer de l'angle δq1 (figure 3B).

Après stabilisation de l'avion 1 sur une trajectoire inclinée (phase III sur la figure 2), l'inclinaison de l'empennage horizontal réglable 2 est commandée par les lois de commande de vol, les gouvernes de profondeur 4 revenant en prolongement aérodynamique dudit empennage 2.

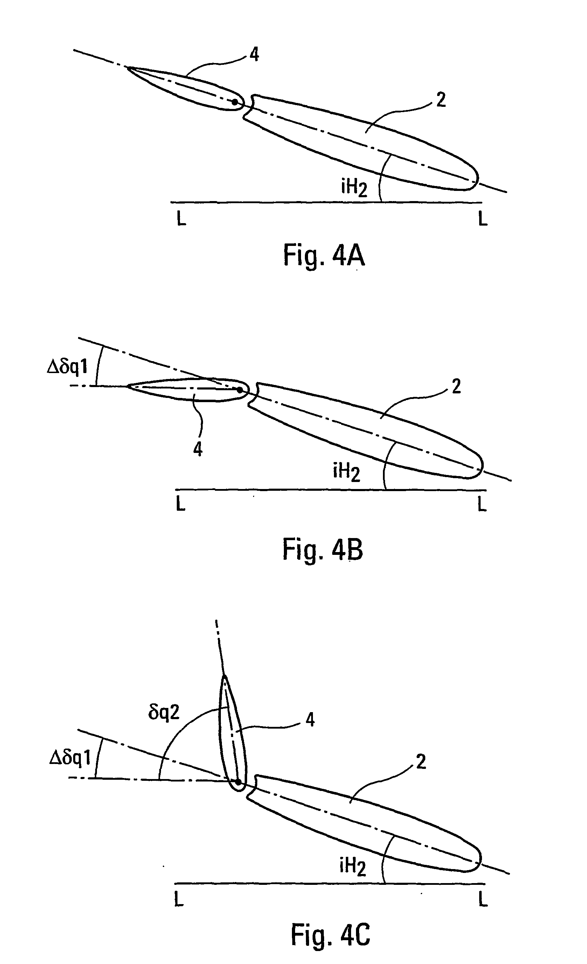

Si l'on considère maintenant le procédé d'aide au décollage conforme à la présente invention, lorsque l'avion 1 est en préparation de décollage, non seulement on prédétermine la vitesse de rotation VR, mais encore on choisit arbitrairement, dans ladite plage de valeurs de vitesse imposée par les dispositions réglementaires régissant l'exploitation des avions de transport civils, une vitesse de référence VRref inférieure à VR et on détermine, pour cette vitesse de référence arbitraire VRref, la valeur prédéterminée iH2 de l'angle de braquage iH dudit empennage horizontal réglable 2 (voir les figures 4A, 5A, 6A et 7A), en fonction d'un nombre limité de paramètres comportant au moins la position longitudinale du centre de gravité CG le long de l'axe L-L, obtenue par calcul de la distance cg dudit centre de gravité par rapport à une origine O (voir la figure 2). Ensuite, pendant la phase d'accélération II, on mesure la vitesse VC de l'avion 1 roulant sur le sol en accélérant et on détermine l'écart variable existant entre les valeurs VC et VRref (soit par le rapport VC/VRref, soit par la différence VC-VRref) et on corrige, avant le début de la rotation, l'action en tangage exercée par l'empennage horizontal réglable 2 braqué de l'angle iH2, comme cela est montré ci-après, en regard des figures 4A à 4C, 5A à 5C, 6A à 6D et 7A à 7D.

Pour simplifier la mise en oeuvre de l'invention, celle-ci prévoit, dans un mode de réalisation avantageux, que la vitesse de rotation de référence VRref est choisie égale à la plus petite vitesse de cette plage de vitesses de rotation imposée par les dispositions réglementaires pour l'avion 1 dans les conditions de décollage.

Dans ces conditions, la vitesse de rotation de référence VRref peut être choisie égale au produit KxVS1g, dans lequel K est un coefficient supérieur à 1 fonction de la poussée et VS1g est la vitesse à laquelle ledit aéronef 1 décroche lorsqu'il est en vol horizontal avec une configuration des becs de bord d'attaque 8 et des volets de bord de fuite 7 semblable à celle utilisée pour le décollage.

Ce coefficient K dépend du rapport entre la poussée de l'avion 1 au décollage et le poids dudit avion. Sa valeur moyenne est voisine de 1,06.

La correction de commande en tangage variable conforme à la présente invention peut être apportée par action sur l'empennage horizontal réglable 2, par action sur les gouvernes de profondeur 4 ou par action sur l'empennage horizontal réglable 2 et sur les gouvernes de profondeur 4.

Dans l'exemple de mise en oeuvre du procédé conforme à la présente invention, illustré par les figures 4A, 4B et 4C, la correction est effectuée par les seules gouvernes de profondeur 4. Dans cet exemple, on n'apporte aucune correction (à cabrer) tant que la vitesse VC de l'avion 1 est inférieure à la vitesse de référence VRref ou à une vitesse proche de cette vitesse de référence (par exemple VRref -10 kts), l'empennage horizontal réglable 2 et les gouvernes 4 restant dans leur position d'origine représentée par la figure 4A (comparable à la figure 3A). En revanche, lorsque la vitesse VC atteint en croissant ladite vitesse de référence (ou ladite vitesse proche), les gouvernes de profondeur 4 sont actionnées, dans le sens à piquer, d'un angle de correction $\Delta\delta q1$ (voir la figure 4B) tel que

$$\Delta\delta q1 = K2 \, (VC - KxVS1g),$$

expression dans laquelle K2 est un coefficient dépendant de la vitesse de référence VRref, de la position longitudinale cg du centre de gravité CG, de la configuration des volets de bord de fuite 7 et des becs de bord d'attaque 8 et de la poussée au décollage. Dès que la vitesse VC de l'avion 1 atteint la vitesse de rotation VR (supérieure à VRref = KxVS1g), le pilote commande les gouvernes de profondeur 4 à cabrer d'un angle δq2 qui s'ajoute algébriquement à la correction Δδq1, figée à la valeur K2(VR-KxVS1g) (voir la figure 4C).

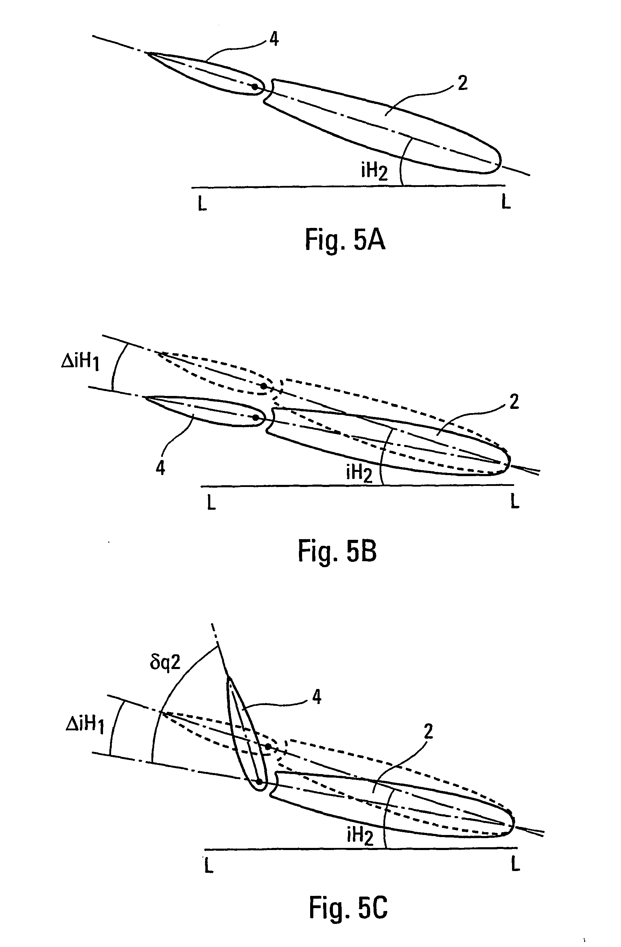

L'exemple des figures 5A, 5B, 5C correspond à celui des figures 4A, 4B et 4C, la correction selon l'invention étant alors apportée par commande de l'empennage horizontal réglable 2. Lorsque la vitesse VC de l'avion 1 atteint en croissant la vitesse de référence VRref ou une vitesse proche (VRref -10 kts), l'empennage horizontal réglable 2 est actionné (à partir de la situation de la figure 5A identique à celle de la figure 4A) dans le sens à piquer (voir la figure 5B) d'un angle de correction ΔiH1, tel que

$$\Delta iH1 = K1 \, (VC - KxVS1g)$$

expression dans laquelle K1 est un coefficient dépendant de la vitesse de référence VRref, de la position longitudinale cg du centre de gravité CG et de la configuration des volets de bord de fuite 7 et des becs de bord d'attaque 8. Sa valeur moyenne est de l'ordre de 0,16°/kt. Ensuite, au moment de la rotation (VC=VR), les gouvernes de profondeur 4 sont, comme précédemment, commandées à cabrer de l'angle δq2, alors que l'empennage horizontal réglable 2 est incliné de l'angle iH2 - ΔiH1 (voir la figure 5C), ledit angle de correction ΔiH1 étant figé à la valeur K1(VR-KxVS1g).

Dans les exemples des figures 4A à 4C, d'une part, et 5A à 5C, d'autre part, si ledit empennage horizontal réglable 2 est n fois plus efficace, en ce qui concerne la commande en tangage, que lesdites gouvernes de profondeur 4, K2 est égal à n fois K1.

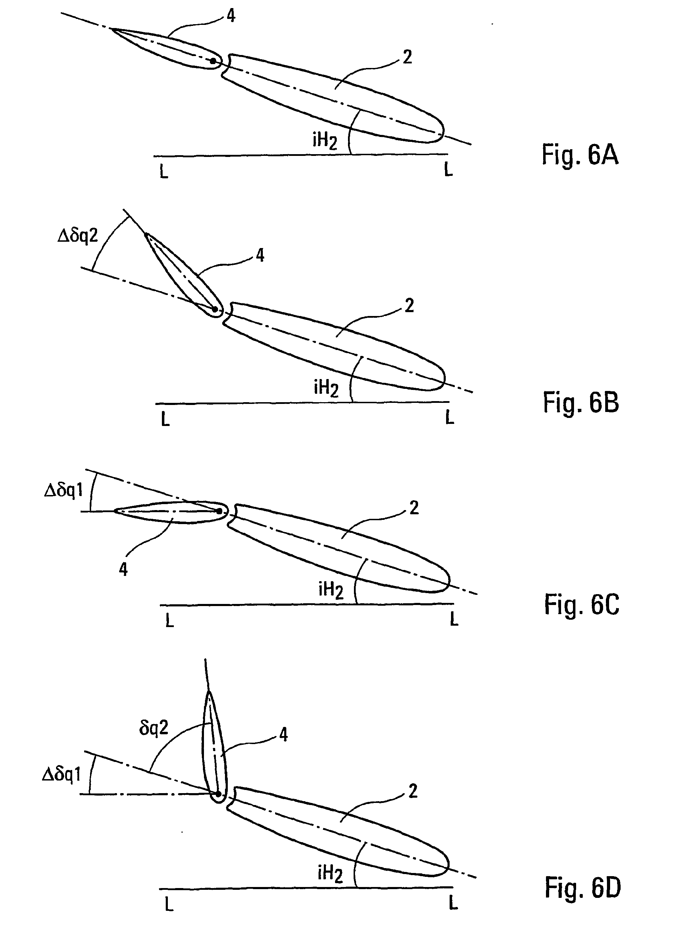

Sur les figures 6A à 6D, on a représenté une variante de l'exemple des figures 4A à 4C. Dans cette variante, les figures 6A, 6C et 6D sont similaires aux figures 4A, 4B et 4C, respectivement. La différence entre ces deux exemples de mise en oeuvre du procédé selon l'invention provient du fait que, entre un seuil de vitesse SV inférieur à VRref (par exemple égal à 80 kts) et VRref, on apporte une correction à cabrer (voir la figure 6B) en braquant les gouvernes de profondeur 4 d'un angle de correction Δδq2 égal à K2(VC-KxVS1g). Ainsi, si le pilote décide d'effectuer la rotation lorsque la vitesse VC est inférieure à VRref, les surfaces aérodynamiques arrière 2, 4 sont dans une position adéquate pour aider à la rotation. Si VC devient supérieure à VRref, on applique alors un moment à piquer comme illustré sur la figure 6C, avant d'effectuer la rotation à la vitesse VR (figure 6D).

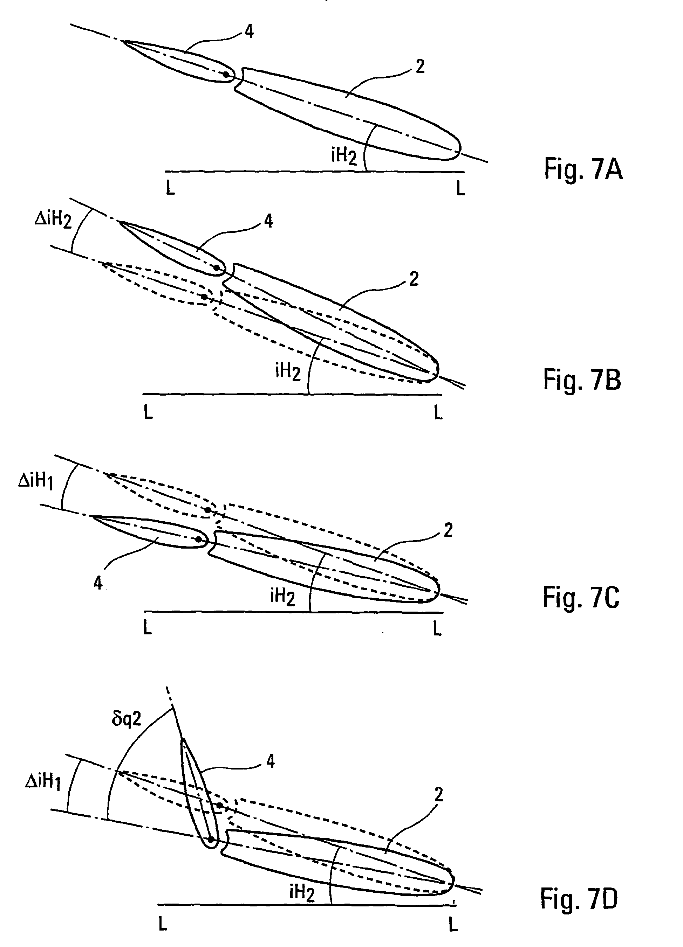

De même, sur les figures 7A à 7D, on a représenté une variante de l'exemple des figures 5A à 5C, les figures 7A, 7C et 7D étant respectivement similaires aux figures 5A, 5B et 5C. La différence entre les deux exemples réside en ce que, entre le seuil de vitesse SV (inférieur à VRref) et VRref, on apporte une correction à cabrer (voir la figure 7B) en braquant l'empennage horizontal réglable 2 d'un angle de correction ΔiH2 égal à K1(VC-KxVS1g), dans le même but que décrit à propos de Δδq2 sur la figure 6B. Si VC devient supérieur à VRref, on applique alors un moment à piquer comme illustré sur la figure 7C, avant d'effectuer la rotation à la vitesse VR (figure 7D).

De ce qui précède, on comprendra aisément que la correction en tangage conforme à la présente invention peut être mise en oeuvre par combinaison des actions de l'empennage horizontal réglable 2 et des gouvernes de profondeur 4.

Les variantes du procédé conforme à la présente invention utilisant les gouvernes de profondeur 4 (figures 4A à 4C et figures 6A à 6D) sont particulièrement aisées à mettre en oeuvre sur l'avion 1.

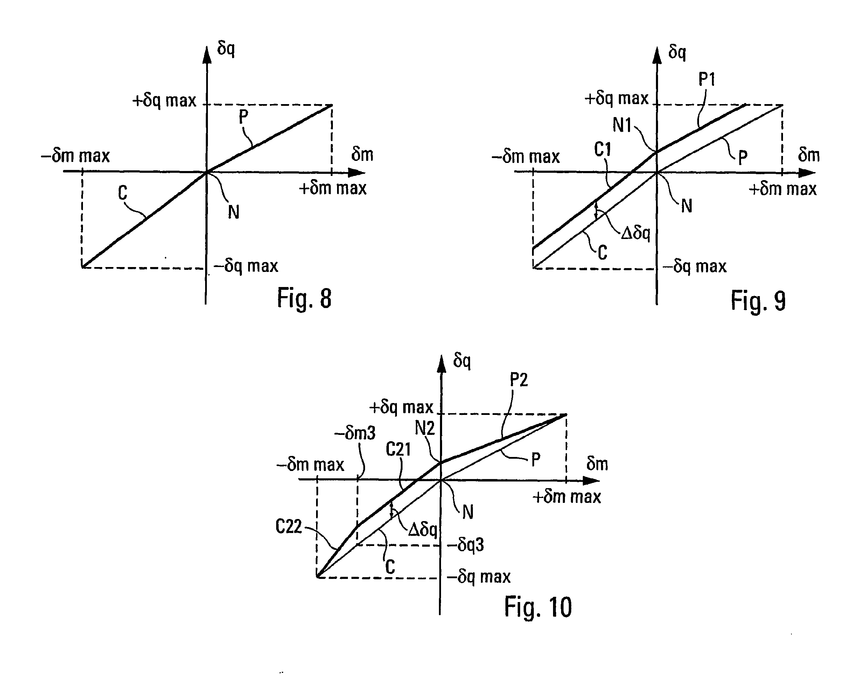

On sait en effet que, comme cela est illustré sur la figure 8, la caractéristique de l'avion 1 donnant, dans un système d'axes rectangulaires, l'angle de braquage δq des gouvernes de profondeur 4 en fonction de l'ordre de braquage δm au manche comporte une partie à piquer P, généralement linéaire, et une partie à cabrer C, généralement linéaire également, lesdites parties à piquer et à cabrer P et C étant raccordées l'une à l'autre en un point neutre N pour lequel δq=0 et δm=0. Ainsi, pour une variation de l'ordre de braquage δm à piquer entre 0 et une valeur maximale +δmmax (et inversement entre +δmmax et 0), le braquage à piquer des gouvernes 4 varie entre 0 et une valeur maximale +δqmax (et inversement entre +δqmax et 0). De même, pour une variation de l'ordre de braquage δm à cabrer entre 0 et une valeur maximale -δmmax (et inversement entre -δmmax et 0), le braquage à cabrer des gouvernes 4 varie entre 0 et une valeur maximale -δqmax (et inversement entre -δqmax et O).

Dans l'exemple de mise en oeuvre de l'invention illustrée par la figure 9, on a modifié la caractéristique C, P connue, montrée par la figure 8, en y ajoutant l'angle de correction Δδq (représentant Δδq1 des figures 4B, 4C, 6C et 6D ainsi que Δδq2 de la figure 6D) aussi bien sur la partie à piquer P que sur la partie à cabrer C. On obtient ainsi une caractéristique modifiée C1, P1, propre à la présente invention et résultant d'une translation d'amplitude Δδq en direction de +δqmax, parallèlement à l'axe δq. Le point neutre N subit également une telle translation, de sorte que le point N1 résultant n'est plus neutre puisque pour l'abscisse δm=0, son ordonnée est égale à Δδq.

Dans le deuxième exemple de mise en oeuvre illustré par la figure 10, on introduit le point de la partie à cabrer C, défini par les coordonnées -δm3 et -δq3 et correspondant à l'angle de braquage δq2 utilisé pour la rotation. Par exemple, -δm3 et -δq3 sont respectivement égaux aux deux tiers de -δmmax et -δqmax. Dans cet exemple, la partie à cabrer modifiée comporte, entre -δm3 et 0, une première portion C21 ayant subi, comme la partie à cabrer C1 de la figure 9, une translation d'amplitude Δδq en direction de +δqmax, parallèlement à l'axe δq, et une seconde portion C22, inclinée, joignant le point -δm3, -δq3 +Δδq au point -δmmax, -δqmax. Dans ce deuxième exemple, le point neutre N est déplacé en N2 (semblable à N1) et la partie à piquer P2 de la caractéristique modifiée est inclinée et joint le point N2 au point +δmmax, +δqmax.

Bien entendu, les deux exemples de caractéristiques modifiées donnés par les figures 9 et 10 ne sont pas limitatifs, de nombreuses autres modifications de la caractéristique C, P étant envisageables.

Dans le cas usuel où l'avion 1 comporte un calculateur (non représenté) dans lequel est stockée une loi de décollage, il est avantageux que le procédé conforme à la présente invention soit intégré à ladite loi.

Quelle que soit la forme de mise en oeuvre du procédé conforme à la présente invention, à la rotation, on peut soit laisser se prolonger la correction quelque temps, soit la figer à la valeur qu'elle atteint pour une valeur de la vitesse VC au moins approximativement égale à la vitesse de rotation VR.

**Revendications**

1.  Procédé d'aide au décollage d'un aéronef (1) comportant un empennage horizontal réglable (2) auquel sont articulées des gouvernes de profondeur (4), procédé selon lequel :

    - on prédétermine :

      ■ une valeur VR de la vitesse de l'aéronef (1), dite vitesse de rotation, à laquelle doit commencer la rotation de décollage à la fin de la phase d'accélération pendant laquelle ledit aéronef roule sur le sol en accélérant, et
      ■ la plage réglementaire des valeurs de vitesse à l'intérieur de laquelle doit se trouver ladite vitesse de rotation VR ; et

    - on applique audit aéronef (1) une commande en tangage d'aide au décollage braquant ledit empennage horizontal réglable (2) d'un angle (iH) de valeur prédéterminée,

    **caractérisé en ce que** :

    - préalablement à ladite phase d'accélération, on choisit arbitrairement, dans ladite plage réglementaire de valeurs de vitesse, une vitesse de référence VRref, inférieure à ladite vitesse de rotation VR, et on détermine, pour cette vitesse de référence VRref, ladite valeur prédéterminée (iH2) de l'angle de braquage (iH) dudit empennage horizontal réglable (2) au moins en fonction de la position longitudinale du centre de gravité (CG) dudit aéronef au décollage ; et
    - pendant ladite phase d'accélération :

      ■ on mesure la vitesse VC dudit aéronef ;
      ■ on détermine en continu l'écart variable existant entre ladite vitesse mesurée VC et ladite vitesse de référence VRref ; et
      ■ on effectue une correction variable de ladite commande en tangage d'aide au décollage en fonction dudit écart de vitesse.

2.  Procédé selon la revendication 1,
    **caractérisé en ce que**, à partir de la rotation, on laisse se prolonger ladite correction pendant l'envol de l'aéronef.

3.  Procédé selon la revendication 1,
    **caractérisé en ce que**, au moment de la rotation, on fige la correction à la valeur qu'elle atteint pour une valeur de la vitesse VC au moins approximativement égale à la vitesse de rotation VR.

4.  Procédé selon l'une des revendications 1 à 3,

**caractérisé en ce que** la correction de ladite commande en tangage d'aide au décollage est obtenue par l'intermédiaire dudit empennage horizontal réglable (2).

5. Procédé selon l'une des revendications 1 à 3,
   **caractérisé en ce que** la correction de ladite commande en tangage d'aide au décollage est obtenue par l'intermédiaire desdites gouvernes de profondeur (4).

6. Procédé selon l'une des revendications 1 à 3,
   **caractérisé en ce que** la correction de ladite commande en tangage d'aide au décollage est obtenue, pour partie, par l'intermédiaire dudit empennage horizontal réglable (2) et, pour partie, par l'intermédiaire desdites gouvernes de profondeur (4).

7. Procédé selon l'une des revendications 1 à 6,
   **caractérisé en ce que** ledit écart de vitesse existant entre lesdites valeurs VC et VRref est estimé par le rapport entre celles-ci.

8. Procédé selon l'une des revendications 1 à 6,
   **caractérisé en ce que** ledit écart de vitesse existant entre lesdites valeurs VC et VRref est estimé par la différence entre celles-ci.

9. Procédé selon l'une quelconque des revendications 1 à 8,
   **caractérisé en ce que**, lorsque la vitesse VC de l'aéronef est supérieure à la vitesse de référence VRref, la correction de ladite commande de tangage d'aide au décollage correspond à une action à piquer.

10. Procédé selon l'une quelconque des revendications 1 à 9,
    **caractérisé en ce que**, lorsque la vitesse VC de l'aéronef est inférieure à la vitesse de référence VRref, la correction de ladite commande en tangage d'aide au décollage correspond à une action à cabrer.

11. Procédé selon l'une des revendications 1 à 9,
    **caractérisé en ce qu'**aucune correction de ladite commande en tangage d'aide au décollage n'est effectuée tant que ladite vitesse VC de l'aéronef n'est pas au moins approximativement égale à ladite vitesse de référence VRref.

12. Procédé selon l'une quelconque des revendications 1 à 11,
    **caractérisé en ce que** ladite vitesse de référence VRref est choisie égale à la valeur de vitesse minimale de ladite plage.

13. Procédé selon la revendication 12, appliqué à un aéronef comportant des volets de bord de fuite (7) et des becs de bord d'attaque (8),
    **caractérisé en ce que** ladite vitesse de référence VRref est égale au produit KxVS1 g, dans lequel K est un coefficient supérieur à 1 et VS1 g est la vitesse à laquelle ledit aéronef (1) décroche lorsqu'il est en vol horizontal avec une configuration des becs de bord d'attaque (8) et des volets de bord de fuite (7) semblable à celle utilisée pour le décollage.

14. Procédé selon la revendication 13,
    **caractérisé en ce que** le coefficient K dépend du rapport entre la poussée de l'aéronef (1) au décollage et le poids dudit aéronef.

15. Procédé selon la revendication 14,
    **caractérisé en ce que** le coefficient K présente une valeur moyenne voisine de 1,06.

16. Procédé selon les revendications 4, 8 et 13,
    **caractérisé en ce que** la valeur prédéterminée (iH2) de l'angle de braquage (iH) dudit empennage horizontal réglable (2) est modifiée d'une valeur de correction ($\Delta$iH1, $\Delta$iH2), du type

$$\Delta iH = K1 \times (VC - K \times VS1g)$$

expression dans laquelle K1 est un coefficient dépendant de la vitesse de référence VRref, de la position longitudinale (cg) du centre de gravité (CG) et de la configuration des volets de bord de fuite (7) et des becs de bord d'attaque (8).

**17.** Procédé selon la revendication 16,
**caractérisé en ce que** la valeur moyenne de K1 est de l'ordre de 0,16°/kt.

**18.** Procédé selon les revendications 5, 8 et 13,
**caractérisé en ce que** lesdites gouvernes de profondeur (4) sont braquées d'un angle de correction $\Delta\delta q$ dont la valeur ($\Delta\delta q1$, $\Delta\delta q2$) est du type

$$\Delta\delta q = K2 \times (VC - K \times VS1g)$$

expression dans laquelle K2 est un coefficient dépendant de la vitesse de référence VRref, de la position longitudinale (cg) du centre de gravité (CG), de la configuration des volets de bord de fuite (7) et des becs de bord d'attaque (8) et de la poussée au décollage.

**19.** Procédé selon les revendications 16 et 18, appliqué à un aéronef (1) dans lequel ledit empennage horizontal réglable (2) est <u>n</u> fois plus efficace, en ce qui concerne la commande en tangage, que lesdites gouvernes de profondeur (4),
**caractérisé en ce que** K2=n$\times$K1.

**20.** Procédé selon la revendication 18, dans lequel la caractéristique (C, P) attachée à l'aéronef (1) et donnant le braquage ($\delta q$) des gouvernes de profondeur (4) en fonction de l'ordre de braquage ($\delta m$) desdites gouvernes de profondeur (4) comporte une partie à piquer (P) et une partie à cabrer (C) raccordées l'une à l'autre en un point neutre (N),
**caractérisé en ce qu'**on modifie ladite caractéristique (C, P) en y ajoutant ledit angle de correction $\Delta\delta q$.

**Claims**

**1.** An assisted take-off method for an aircraft (1) comprising a trimmable horizontal stabilizer (2) onto which are articulated elevators (4), a method according to which:

- there is predetermined:

· a value VR of the speed of the aircraft (1), called the rotation speed, at which must begin the take-off rotation at the end of the acceleration phase during which said aircraft is running on the ground whilst accelerating, and
· the regulation range of speed values within which must be said rotation speed VR; and

- a take-off assistance pitch command is applied to said aircraft (1) deflecting said trimmable horizontal stabilizer (2) by an angle (iH) of predetermined value,

**characterized in that**:

- prior to said acceleration phase, there is chosen arbitrarily, within said regulation range of speed values, a reference speed VRref, lower than said rotation speed VR, and there is determined, for that reference speed VRref, said predetermined value (iH2) of the deflection angle (iH) of said trimmable horizontal stabilizer (2) at least as a function of the longitudinal position of the center of gravity (CG) of said aircraft on take-off; and
- during said acceleration phase:

· the speed VC of said aircraft is measured;
· the variable deviation existing between said measured speed VC and said reference speed VRref is determined continuously; and
· a variable correction of said take-off
assistance pitch command is carried out according to said speed deviation.

**2.** The method as claimed in claim 1, **characterized in that**, starting from the rotation, said correction is allowed to continue during the take-off of the aircraft.

**3.** The method as claimed in claim 1, **characterized in that** at the moment of the rotation, the correction is fixed at the value it reaches for a speed value VC at least approximately equal to the rotation speed VR.

**4.** The method as claimed in one of claims 1 to 3, **characterized in that** the correction of said take-off assistance pitch command is obtained by the intermediary of said trimmable horizontal stabilizer (2).

**5.** The method as claimed in one of claims 1 to 3, **characterized in that** the correction of said take-off assistance pitch command is obtained by the intermediary of said elevators (4).

**6.** The method as claimed in one of claims 1 to 3, **characterized in that** the correction of said take-off assistance pitch command is obtained partly by the intermediary of said trimmable horizontal stabilizer (2) and partly by the intermediary of said elevators (4).

**7.** The method as claimed in one of claims 1 to 6, **characterized in that** said speed deviation existing between said values VC and VRref is estimated by the ratio between them.

**8.** The method as claimed in one of claims 1 to 6, **characterized in that** said speed deviation existing between said values VC and VRref is estimated by the difference between them.

**9.** The method as claimed in any one of claims 1 to 8, **characterized in that**, when the speed VC of the aircraft is greater than the reference speed VRref, the correction of said take-off assistance pitch command corresponds to a pitch-down action.

**10.** The method as claimed in any one of claims 1 to 9, **characterized in that**, when the speed VC of the aircraft is less than the reference speed VRref, the correction of said take-off assistance pitch command corresponds to a pitch-up action.

**11.** The method as claimed in one of claims 1 to 9, **characterized in that** no correction of said take-off assistance pitch command is carried out as long as said speed VC of the aircraft is not at least approximately equal to said reference speed VRref.

**12.** The method as claimed in any one of claims 1 to 11, **characterized in that** said reference speed VRref is chosen to be equal to the minimum speed value of said range.

**13.** The method as claimed in claim 12, applied to an aircraft comprising trailing edge flaps (7) and leading edge slats (8), **characterized in that** said reference speed VRref is equal to the produce KxVS1g, in which K is a coefficient greater than 1 and VS1g is the speed at which said aircraft (1) stalls when it is in horizontal flight with a configuration of the leading edge slats (8) and of the trailing edge flaps (7) similar to that used for take-off.

**14.** The method as claimed in claim 13, **characterized in that** the coefficient K depends on the ratio between the thrust of the aircraft (1) at take-off and the weight of said aircraft.

**15.** The method as claimed in claim 14, **characterized in that** the coefficient K has a mean value close to 1.06.

**16.** The method as claimed in claims 4, 8 and 13, **characterized in that** the predetermined value (iH2) of the deflection angle (iH) of said trimmable horizontal stabilizer (2) is modified by a correction value ($\Delta$iH1, $\Delta$iH2) expressed as follows:

$$\Delta iH = K1 \times (VC-KxVS1g)$$

in which expression K1 is a coefficient dependent on the reference speed VRref, on the longitudinal position (cg) of the center of gravity (CG) and on the configuration of the trailing edge flaps (7) and of the leading edge slats (8).

17. The method as claimed in claim 16, **characterized in that** the mean value of K1 is about 0.16°/kt.

18. The method as claimed in claims 5, 8 and 13, **characterized in that** said elevators (4) are deflected by a correction angle $\Delta\delta q$ whose value ($\Delta\delta q1$, $\Delta\delta q2$) is expressed as follows

$$\Delta\delta q = K2 \ x \ (VC-KxVS1g)$$

in which expression K2 is a coefficient dependent on the reference speed VRref, on the longitudinal position (cg) of the center of gravity (CG), on the configuration of the trailing edge flaps (7) and on the leading edge slats (8) and on the thrust at take-off.

19. The method as claimed in claims 16 and 18, applied to an aircraft (1) in which said trimmable horizontal stabilizer (2) is n times more effective than said elevators (4), with regard to pitch control, **characterized in that** K2=nxK1.

20. The method as claimed in claim 18, wherein the characteristic (C, P) associated with the aircraft (1) and giving the deflection ($\delta q$) of the elevators (4) as a function of the deflection instruction ($\delta m$) of said elevators (4) comprises a pitch-down part (P) and a pitch-up part (C) connected to each other at a neutral point (N), **characterized in that** said characteristic (C, P) is modified by adding said correction angle $\Delta\delta q$ to it.

**Patentansprüche**

1. Starthilfeverfahren für ein Flugzeug (1) mit einem einstellbaren Höhenleitwerk (2), an das Höhenruder (4) angelenkt sind, wobei bei dem Verfahren:

   - Folgendes vorgegeben wird:

     • ein Wert VR der Geschwindigkeit des Flugzeugs (1), der sogenannten Rotationsgeschwindigkeit, bei welcher am Ende der Beschleunigungsphase, während der das Flugzeug unter Beschleunigung am Boden rollt, die Rotation beim Start beginnen muss und
     • der vorschriftsmäßige Bereich der Geschwindigkeitswerte, innerhalb dessen die Rotationsgeschwindigkeit VR liegen muss und

   - zur Starthilfe die Nicklage des Flugzeugs (1) gesteuert wird, indem das einstellbare Höhenleitwerk (2) um einen Winkel (iH) ausgeschlagen wird, dessen Wert vorgegeben ist,

   **dadurch gekennzeichnet, dass**:

     - vor der Beschleunigungsphase aus dem vorschriftsmäßigen Bereich der Geschwindigkeitswerte eine beliebige Referenzgeschwindigkeit VRref ausgewählt wird, die geringer als die Rollgeschwindigkeit VR ist und für diese Referenzgeschwindigkeit VRref der vorgegebene Wert (iH2) des Ausschlagwinkels (iH) des einstellbaren Höhenleitwerks (2) zumindest in Abhängigkeit von der Längsposition des Schwerpunktes (CG) des Flugzeugs beim Start bestimmt wird und
     - während der Beschleunigungsphase:

       • die Geschwindigkeit VC des Flugzeugs gemessen wird,
       • die variable Abweichung zwischen der gemessenen Geschwindigkeit VC und der Referenzgeschwindigkeit VRref kontinuierlich bestimmt wird und
       • eine variable Korrektur der Steuerung der Nicklage zur Starthilfe abhängig von der Geschwindigkeitsabweichung durchgeführt wird.

2. Verfahren nach Anspruch 1,
   **dadurch gekennzeichnet, dass** ab der Rotation eine Verlängerung der Korrektur während des Abflugs des Flugzeugs zugelassen wird.

3. Verfahren nach Anspruch 1,

**dadurch gekennzeichnet, dass** die Korrektur zum Zeitpunkt der Rotation auf den Wert festlegt wird, den sie bei einem Wert der Geschwindigkeit VC erreicht, der zumindest annähernd gleich der Rotationsgeschwindigkeit VR ist.

4. Verfahren nach einem der Ansprüche 1 bis 3,
   **dadurch gekennzeichnet, dass** die Korrektur der Steuerung der Nicklage zur Starthilfe mithilfe des einstellbaren Höhenleitwerks (2) erreicht wird.

5. Verfahren nach einem der Ansprüche 1 bis 3,
   **dadurch gekennzeichnet, dass** die Korrektur der Steuerung der Nicklage zur Starthilfe mithilfe der Höhenruder (4) erreicht wird.

6. Verfahren nach einem der Ansprüche 1 bis 3,
   **dadurch gekennzeichnet, dass** die Korrektur der Steuerung der Nicklage zur Starthilfe teilweise mithilfe des einstellbaren Höhenleitwerks (2) und teilweise mithilfe der Höhenruder (4) erreicht wird.

7. Verfahren nach einem der Ansprüche 1 bis 6,
   **dadurch gekennzeichnet, dass** die Geschwindigkeitsabweichung zwischen den Werten VC und VRref durch das Verhältnis zwischen diesen berechnet wird.

8. Verfahren nach einem der Ansprüche 1 bis 6,
   **dadurch gekennzeichnet, dass** die Geschwindigkeitsabweichung zwischen den Werten VC und VRref durch die Differenz zwischen diesen berechnet wird.

9. Verfahren nach einem der Ansprüche 1 bis 8,
   **dadurch gekennzeichnet, dass**, wenn die Geschwindigkeit VC des Flugzeugs höher als die Referenzgeschwindigkeit VRref ist, die Korrektur der Steuerung der Nicklage zur Starthilfe einer abwärts gerichteten Nickbewegung entspricht.

10. Verfahren nach einem der Ansprüche 1 bis 9,
    **dadurch gekennzeichnet, dass**, wenn die Geschwindigkeit VC des Flugzeugs geringer als die Referenzgeschwindigkeit VRref ist, die Korrektur der Steuerung der Nicklage zur Starthilfe einer aufwärts gerichteten Nickbewegung entspricht.

11. Verfahren nach einem der Ansprüche 1 bis 9,
    **dadurch gekennzeichnet, dass** keine Korrektur der Steuerung der Nicklage zur Starthilfe durchgeführt wird, solange die Geschwindigkeit VC des Flugzeugs nicht zumindest annähernd gleich der Referenzgeschwindigkeit VRref ist.

12. Verfahren nach einem der Ansprüche 1 bis 11,
    **dadurch gekennzeichnet, dass** als Referenzgeschwindigkeit VRref der kleinste Geschwindigkeitswert aus dem Bereich gewählt wird.

13. Verfahren nach Anspruch 12, das bei einem Flugzeug mit Hinterkantenklappen (7) und Vorflügeln (8) eingesetzt wird,
    **dadurch gekennzeichnet, dass** die Referenzgeschwindigkeit VRref gleich dem Produkt KxVS1g ist, in dem K ein Koeffizient größer als 1 ist und VS1g die Geschwindigkeit ist, bei der das Flugzeug (1) überzieht, wenn es sich im Horizontalflug befindet und seine Vorflügel (8) und Hinterkantenklappen (7) ähnlich konfiguriert sind wie beim Start.

14. Verfahren nach Anspruch 13,
    **dadurch gekennzeichnet, dass** der Koeffizient K abhängig ist von dem Verhältnis zwischen dem Schub des Flugzeugs (1) beim Start und dem Gewicht des Flugzeuges.

15. Verfahren nach Anspruch 14,
    **dadurch gekennzeichnet, dass** der Koeffizient K einen Mittelwert von etwa 1,06 aufweist.

16. Verfahren nach den Ansprüchen 4, 8 und 13,
    **dadurch gekennzeichnet, dass** der vorgegebene Wert (iH2) des Ausschlagwinkels (iH) des einstellbaren Höhenleitwerks (2) um einen Korrekturwert ($\Delta$iH1, $\Delta$iH2) des Typs

$$\Delta iH = K1 \times (VC-K \times VS1g)$$

verändert wird, wobei in diesem Ausdruck K1 ein Koeffizient ist, der von der Referenzgeschwindigkeit VRref, von der Längsposition (cg) des Schwerpunktes (CG) und von der Konfiguration der Hinterkantenklappen (7) und der Vorflügel (8) abhängig ist.

**17.** Verfahren nach Anspruch 16, **dadurch gekennzeichnet, dass** der Mittelwert von K1 in der Größenordnung von 0,16°/kt. liegt.

**18.** Verfahren nach den Ansprüchen 5, 8 und 13,
**dadurch gekennzeichnet, dass** die Höhenruder (4) um einen Korrekturwinkel $\Delta\delta q$ ausgeschlagen werden, dessen Wert ($\Delta\delta q1$, $\Delta\delta q2$) von dem Typ

$$\Delta\delta q = K2 \times (VC-K \times VS1g)$$

ist, wobei in diesem Ausdruck K2 ein Koeffizient ist, der von der Referenzgeschwindigkeit VRref, von der Längsposition (cg) des Schwerpunktes (CG), von der Konfiguration der Hinterkantenklappen (7) und der Vorflügel (8) und dem Schub beim Start abhängig ist.

**19.** Verfahren nach den Ansprüchen 16 und 18, angewendet auf ein Flugzeug (1), bei dem das einstellbare Höhenleitwerk (2) im Hinblick auf die Steuerung der Nicklage n-Mal wirksamer ist als die Höhenruder (4),
**dadurch gekennzeichnet, dass** K2 = nxK1 ist.

**20.** Verfahren nach Anspruch 18, in dem die Kennlinie (C, P), die mit dem Flugzeug (1) verbunden ist und den Ausschlag (($\delta q$) der Höhenruder (4) in Abhängigkeit von dem Ausschlagbefehl ($\delta m$) der Höhenruder (4) angibt, einen kopflastig trimmenden Teil (P) und einen schwanzlastig trimmenden Teil (C) aufweist, die in einem Nullpunkt (N) miteinander verbunden sind, **dadurch gekennzeichnet, dass** die Kennlinie (C, P) verändert wird, indem der Korrekturwinkel $\Delta\delta q$ hinzugefügt wird.

Fig. 1

EP 1 880 259 B1

Fig. 2

Fig. 3A

Fig. 3B

4

2

iH₂

L       L

## Fig. 4A

Δδq1

2

4

iH₂

L       L

## Fig. 4B

δq2

4

Δδq1

2

iH₂

L       L

## Fig. 4C

Fig. 5A

Fig. 5B

Fig. 5C

Fig. 6A

Fig. 6B

Fig. 6C

Fig. 6D

Fig. 7A

Fig. 7B

Fig. 7C

Fig. 7D

Fig. 8

Fig. 9

Fig. 10

**EP 1 880 259 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2826469